# NEUE EUROPÄISCHE PATENTSCHRIFT

(11) **EP 2 368 800 B2**
(45) Veröffentlichungstag und Bekanntmachung des Hinweises auf die Entscheidung über den Einspruch: **13.12.2017**
(45) Hinweis auf die Patenterteilung: 17.09.2014
(21) Anmeldenummer: 11002310.8
(22) Anmeldetag: 21.03.2011
(51) Int. Cl.: B65G 21/20, B65B 61/00, B65B 63/02, B65G 15/16, B65B 53/06

(54) **Einrichtung zum Transportieren von Objekten**
Device for transporting objects
Dispositif de transport d'objets

(30) Priorität: 24.03.2010 DE 102010012597
(43) Veröffentlichungstag der Anmeldung: 28.09.2011
(73) Patentinhaber: MULTIVAC Sepp Haggenmüller SE & Co. KG, 87787 Wolfertschwenden (DE)
(72) Erfinder: Winter, Dieter, 95448 Bayreuth (DE); Rothermel, Klaus, 87782 Unteregg (DE)
(74) Vertreter: Grünecker Patent- und Rechtsanwälte PartG mbB

(56) Entgegenhaltungen:
- EP-A1- 2 128 029
- WO-A1-03/093114
- WO-A1-2009/020981
- DE-C1- 3 527 635
- DE-U- 1 787 577
- DE-U1- 29 511 405
- GB-A- 591 080
- GB-A- 1 075 614
- US-A- 2 525 651
- US-A- 3 411 265
- US-A- 4 139 979
- US-A1- 2007 119 127
- US-A1- 2008 128 246

## Beschreibung

Die Erfindung bezieht sich auf eine Einrichtung gemäß dem Oberbegriff des Anspruchs 1 sowie auf einen Trockentunnel gemäß Anspruch 15, auf einen Schrumpftunnel gemäß Anspruch 16 und auf eine Verpackungsanlage gemäß Anspruch 17.

In Verpackungsmaschinen, auf denen Verpackungen aus stark schrumpffähigen Folien hergestellt werden, werden die Verpackungen üblicherweise nach dem Vorgang des Vereinzelns aus der Verpackungsmaschine auf einem Transportband heraustransportiert und anschließend durch einen so genannten Schrumpftunnel befördert. In diesem Schrumpftunnel werden die Packungen durch ein Heißwasserbad befördert oder von oben mit heißem Wasser beregnet bzw. übergossen. Durch diesen Wärmeübertrag schrumpft die Folie und legt sich unter anderem noch näher an das Produkt an und es entsteht eine optisch sehr attraktive Verpackung. Anschließend werden die Verpackungen getrocknet, um sie in weiteren Schritten in Behältern einzulegen oder für weitere Verfahrensschritte getrocknet zur Verfügung zu stellen.

Die Trocknung erfolgt üblicherweise in so genannten Trockentunneln. Dabei werden die Verpackungen, die aus dem Schrumpftunnel kommen, auf ein Transportband des Trockentunnels übergeben und in den Trockentunnel hineinbefördert. Im Tunnel sind vorteilhafterweise Luftdüsen oberhalb und unterhalb des Transportbandes angeordnet, die mit hoher Luftgeschwindigkeit die Nässe und Feuchtigkeit auf der Oberfläche der Verpackung abblasen. Das Transportband ist dabei als Gitter oder Netz ausgeführt, um die Luft von unten an die Verpackung gelangen zu lassen und ebenso die Nässe nach unten abfließen zu lassen.

Die DE 35 27 635 C1 beschreibt einen Trockner mit einer Konvektionszone zum Trocknen von Furnieren, die durch Transportbänder bestehend aus luftdurchlässigem Gewebe durch den Trockner gefördert werden, während die Furniere allseitig mit Trocknungsluft beaufschlagt werden.

Um eine hohe Effektivität der Trocknung bei gleichzeitiger Reduzierung der Trocknungsstrecke und somit einen geringen Platzbedarf des Trockentunnels zu erreichen, wird die Luftmenge und Luftgeschwindigkeit maximiert. Dies führt zu dem Problem, dass leichte oder geometrisch ungünstige Verpackungen durch die Luftströmungen ihre Lage auf dem Transportband verändern oder sogar angehoben werden können. Dies kann zu Beschädigungen der Verpackungen oder zu einer Stausituation am Ende der Trocknungsstrecke im Trockentunnel führen. Im weiteren Verlauf kann es dann zum Zwangshalt der gesamten Verpackungslinie kommen und die Produktivität negativ beeinflusst werden.

Die WO 2009/020981 A1 offenbart ein Transportsystem, bei dem Objekte auf einem ersten Transportband aufliegend befördert werden und durch ein zweites Transportband, das synchron mit dem ersten Transportband angetrieben ist und dabei teilweise auf den Objekten durch sein Eigengewicht aufliegt, niedergehalten werden. Abgesehen von einem Aufschneiden ist dabei jedoch keine weitere Behandlung der Produkte vorgesehen.

Aufgabe der vorliegenden Erfindung ist es, eine Einrichtung und einen Trockentunnel und/oder Schrumpftunnel zur Verfügung zu stellen, bei denen die vorstehend beschriebenen Nachteile beseitigt werden können.

Diese Aufgabe wird gelöst durch eine Einrichtung mit den Merkmalen des Anspruchs 1 bzw. durch einen Trockentunnel nach Anspruch 15, durch einen Schrumpftunnel nach Anspruch 16 oder eine Verpackungsanlage nach Anspruch 17. Vorteilhafte Weiterbildungen der Erfindung sind in den Unteransprüchen angegeben.

Um zu verhindern, dass leichte Objekte (z.B. Packungen) oder Objekte mit ungünstiger Oberflächengestaltung durch die unteren Fluiddüsen (z.B. Wasser- oder Luftdüsen) seitlich oder nach oben geblasen werden und dabei kippen oder angehoben werden oder durch einen Düsenvorhang nicht hindurch transportiert werden können, wird eine erfindungsgemäße Einrichtung verwendet, bei der mittels eines zweiten Bandes, das oberhalb des Transportbandes parallel verläuft, die Packungen durch das Anlegen des zweiten Bandes auf dem Transportband niedergehalten werden.

Damit ist sichergestellt, dass die Packungen ihre Lage auf dem Transportband nicht verändern und somit prozesssicher trotz höchster Fluid-Strömungsleistung und beid- oder allseitig angebrachter Düsen transportiert werden, z. B. durch einen Schrumpf- oder Trockentunnel hindurch.

Dabei ist es von Vorteil, wenn sich das Transportband und das zweite obere Band synchron mit gleicher Geschwindigkeit bewegen, um die Lage der Packung oder Vielzahl von Packungen ihre Lage auf und zum Transportband nicht verändern.

Es ist notwendig, um eine synchrone Geschwindigkeit zwischen beiden Bändern zu erreichen, dass entweder beide Bänder einen eigenen Antrieb besitzen oder diese einen gemeinsamen Antrieb nutzen, bei dem beispielsweise eine Antriebswelle des zweiten Bandes über Getriebe oder Riemen von einer Antriebswelle des Transportbandes angetrieben wird.

Da in einem Trockentunnel die Effizienz der Trocknung auch von einer hohen Luft- und Wasserdurchlässigkeit beider Bänder abhängt, damit eine Luftströmung an der Packung entlang gegeben ist, aber auch der Nässe- und Feuchtigkeitsabfluss gewährleistet ist, um auf einer möglichst kurzen Trockenstrecke eine Packung ausreichend für einen nachfolgenden Prozess getrocknet aus dem Trockentunnel heraustransportieren zu können, sind vorzugsweise im zweiten Band Öffnungen bei einem gleichzeitig gitterartigen Aufbau vorgesehen.

Das erfindungsgemäße zweite Band ist in vorteilhafter Weise als Metallgeflechtsgurt ausgeführt, das eine offenmaschige Fläche von 70% oder bevorzugt über 80% aufweist.

Als sinnvoll und besonders effektiv hat es sich herausgestellt, beide Bänder, das Transportband und das zweite Band, aus dem gleichen Material bevorzugt als Metallgeflechtsgurt auszuführen.

Eines der Bänder oder beide Bänder können Querstäbe aufweisen, um ein Durchhängen des Bandes quer zur Transportrichtung zu verhindern.

Wird das Material des zweiten Bandes geeignet gewählt, so werden die Packungen durch die Gewichtskraft des freien Trums auf dem Transportband sicher gehalten. Dabei kann sich das zweite Band an die Packung so anlegen, dass es die Packung nicht nur an der Oberseite oder einer höchsten Stelle berührt, sondern sich vorn und hinten, in Transportrichtung gesehen, an der Packung anlegt, ohne dabei einen schädlichen Druck auf die Packung auszuüben.

Damit es bei bestimmten Ausführungen der Bandmaterialien nicht zum unerwünschten Verhaken der Bänder kommt, wenn sich die Bänder ohne Packungen im Trockentunnel bewegen, wird wenigstens auf einer Seite des Transportbandes eine Auflageleiste vorgesehen, die dies verhindert und gleichzeitig auch als seitliche Begrenzung der Förderfläche des Transportbandes fungiert. Vorteilhafterweise sind beidseitig Auflageleisten vorgesehen, die so ausgeführt sind, dass sichergestellt ist, dass trotz einer gegebenen Durchbiegung des zweiten Bandes bei seitlichem Aufliegen auf den Auflageleisten kein Kontakt mit dem Transportband möglich ist. Ein bevorzugtes Material der Auflageleiste ist POM.

Um sicherzustellen, dass die Packungen bereits vor dem Erreichen der Behandlungsstrecke, hier Trockenstrecke (diese ist als Bereich zu definieren, in dem Luftströmungen oder Verwirbelungen durch die verschiedenen Fluiddüsen, hier Luftdüsen, von oben und unten und/oder auch allseitig wirken), sicher auf dem Transportband gehalten werden, steht das zweite Band auch wenigstens einlaufseitig über die Trockenstrecke hinaus.

Bei unterschiedlichen Packungsgrößen und -höhen hat es sich als besonders vorteilhaft gezeigt, die erfindungsgemäße Einrichtung in der Höhe verstellbar auszuführen, um zu verhindern, dass die Packungen zu unterschiedlich belastet werden.

Da eine vordere und hintere Führungswelle des zweiten Bandes auch die maximale Produkthöhe begrenzen können, ist es auch hier sinnvoll, sich durch eine HöhenVerstellbarkeit der Wellen der Packungshöhe anpassen zu können. Dies hat sekundär zum Vorteil, dass auch die oberen Luftdüsen mit der Einrichtung in der Höhe verstellbar ausgeführt werden können, um die maximale Effizienz der Luftströmung zum Trocknen zu gewährleisten.

Für einen automatisch ablaufenden Prozess in einer Verpackungsanlage ist bevorzugt ein Sensor im Bereich der Packungszuführung zum Trockentunnel zur Ermittlung der Packungshöhe vorgesehen, der vorteilhafter Weise mit einer Steuerung verbunden ist, die die Verstellung der erfindungsgemäßen Einrichtung in Abhängigkeit der Packungshöhe ausführt.

Besonders geeignet, ist diese Einrichtung zum Einsatz in einem Trockentunnel zum Trocknen von Packungen, die zuvor einen Schrumpftunnel mit heißem Wasser zum Schrumpfen von geeigneten Folien durchlaufen haben, so dass sich noch Nässe, Tropfen oder Feuchtigkeit auf und an der Packung befinden.

Auch der Einsatz dieser Einrichtung in einem Schrumpftunnel zum Behandeln von Packungen mit heißem Wasser ist möglich, um auch hier leichte Packungen sicher durch den Fluidregen zu transportieren.

Eine erfindungsgemäße Verpackungsanlage umfasst eine Verpackungsmaschine, die Packungen mit Produktinhalt herstellt, die anschließend durch einen Schrumpftunnel gefördert werden und danach einem Trockentunnel mit der erfindungsgemäßen Einrichtung zugeführt werden.

Im Folgenden wird ein vorteilhaftes Ausführungsbeispiel der Erfindung anhand einer Zeichnung näher dargestellt. Im Einzelnen zeigen:
Fig. 1 einen erfindungsgemäßen Trockentunnel,
Fig. 2 den Stand der Technik im Trockenbereich eines Trockentunnels aus Figur 1,
Fig. 3 ein Ausführungsbeispiel einer erfindungsgemäßen Einrichtung.

Gleiche Komponenten sind in den Figuren durchgängig mit gleichen Bezugszeichen versehen worden.

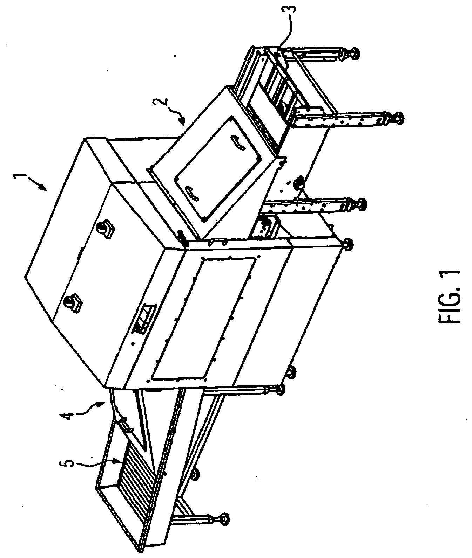

Figur 1 zeigt einen Trockentunnel 1 mit einer Zuführseite 2 und einem Zuführband 3 sowie einer Ausgangsseite 4 und einer Rollenbahn 5, auf der trockene Packungen aus dem Trockentunnel herausbefördert werden.

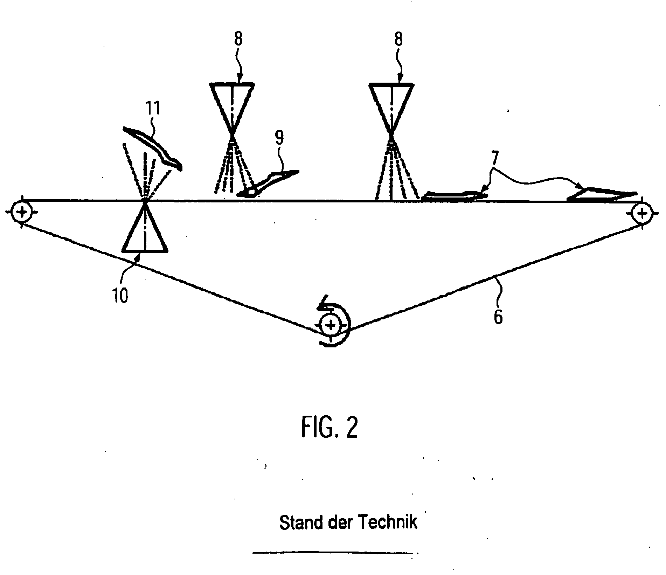

Figur 2 stellt den Stand der Technik dar und zeigt das Innere eines Trockentunnels schematisch als seitliche Ansicht mit einem Transportband 6 und darauf befindlichen Packungen 7. Es sind Luftdüsen 8 vorhanden, die von oben Luft auf die Packungen blasen. Dabei besteht die Gefahr, dass Packungen 9 durch die Luftströmung zurückgedrückt werden, da Luftgeschwindigkeiten von 100 m/s und darüber erreicht werden können und das Transportband 6 nicht in der Lage ist diese Packung 9 an allen Luftdüsen vorbei zu transportieren.

Durch Luftdüsen 10, die unterhalb des Transportbandes 6 angeordnet sind und nach oben die Packung 11 anblasen, kann es hierbei zum in Fig. 2 gezeigten, unerwünschten Abheben einer leichten Packung 11 kommen. Dies kann zu Problemen, wie Beschädigung der Packung, Packungsstau im Trockentunnel oder weiteren Prozessstörungen führen.

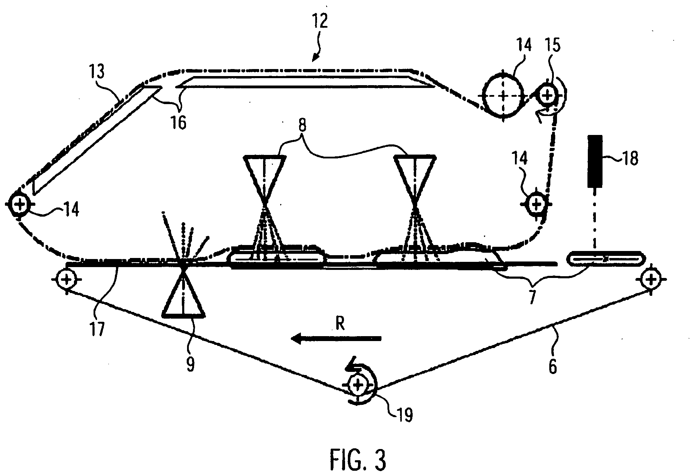

In Figur 3 ist die seitliche Ansicht einer erfindungsgemäßen Einrichtung 12 dargestellt, die sich im Inneren eines Trockentunnels 1 befindet. Das Transportband 6 ist wie im Stand der Technik ausgeführt. Die Packungen 7 werden bereits vor dem Bereich der Trockenstrecke dem Trockentunnel mittels des Transportbands 6 zugeführt. Die Transportrichtung R ist mit einem Pfeil nach links gerichtet angegeben. Ein zweites Band 13 wird über Wellen 14 und 15 sowie Führungen 16 geführt, wobei die Welle 15 angetrieben ausgeführt ist. Das zweite Transportband 13 läuft synchron mit dem Transportband 6 und ist oberhalb des Transportbands 6 angeordnet.

Das zweite Band 13 ist (bezogen auf den durch alle Wellen bzw. Umlenkrollen definierten Pfad) mit einer Überlänge von 2% bis 10% ausgeführt, die es ihm ermöglicht, zwischen den unteren Umlenkrollen durchzuhängen und dadurch Höhenunterschiede der Packungen 7 auszugleichen und sich auch an und/oder teilweise um die Packung 7 anzulegen, um damit die Packung 7 einerseits nach unten gegen das Transportband 6 niederzuhalten und andererseits durch die auftretende Haftung die Packung 7 selbst synchron mit dem Transportband 6 weiterzubefördern.

Die Gefahr eines Packungsstaus durch Zurückdrängen oder Anheben von Packungen ist hierdurch eliminiert.

Seitliche Auflageleisten 17 sind in dem Bereich vorhanden, in dem die Gefahr oder Möglichkeit besteht, dass das zweite Band 13 mit dem Transportband 6 in Kontakt kommen könnte.

Die Einrichtung 12 mit dem zweiten Band 13 ist höhenverstellbar im Bereich X, d.h. der vertikale Abstand X zwischen dem Transportband 6 und der Unterkante der Wellen 14 kann verändert werden.

Ein Sensor 18 in Transportrichtung R vor der Einrichtung 12 kann die Produkthöhen und - anzahl erfassen und an eine nicht gezeigte Steuerung weiterleiten, die in Abhängigkeit der im Trockenbereich sich befinden Packungen 7 die Verstellhöhe X vorteilhaft für den Prozess des Trocknens und Transports regelt.

Alternativ zu einem eigenen Antrieb der Welle 15 des zweiten Bandes 13 ist es sinnvoll die Welle 15 mit einer Antriebswelle 19 des Transportbandes 6 zu koppeln, um damit auch gleichzeitig eine Synchronisierung beider Bänder 6, 13 zueinander auf einfachste Weise zu erzielen.

Die Luftdüsen 8 können mit dem zweiten Band 13 in Bezug auf die Höhe X mitverstellt werden oder eine eigene Verstellmöglichkeit besitzen.

Der Betriebsablauf kann wie folgt beschrieben werden:
Eine Packung 7 wird an den Trockentunnel 1 übergeben und wird mittels des Transportbandes 6 im Bereich der Einrichtung 12 befördert. Durch das Gewicht des zweiten Bandes 13, ausgeführt als oberes Niederhalterband, wird die Packung 7 an das Transportband 6 gedrückt, da das zweite Band 13 aufgrund seiner Schwerkraft und der entsprechenden (Über-) Länge des freien Trums durchhängt. Das obere Niederhalterband 13 passt sich an die Packungsform an, liegt auf der Packung 7 und bewegt sich mit der Packung 7 mit. So kann die Packung 7 nicht durch Luftströmungen verschoben, angehoben oder umgedreht werden. Die Produkthöhe darf in einem gewissen Bereich variieren, ohne dass Einstellarbeiten oder Verstellungen der Einrichtung notwendig sind. Die maximale Packungshöhe X wird durch die Wellen 14 am Ein- und Auslauf der Einrichtung 12 und evtl. durch die Position der oberen Düsen 8 bestimmt. Am Ende der Einrichtung 12 hebt sich das obere Niederhalterband 13 von der Packung 7 ab und gibt sie für den Weitertransport aus dem Trockentunnel 1 frei.

Es ist auch denkbar, die erfindungsgemäße Einrichtung 12 zum Niederhalten von Packungen 7 auf einem Transportband in einem Schrumpftunnel einzusetzen, um Packungen 7 prozesssicher durch einen Heißwasservorhang oder durch ein Heißwasserbad hindurch zu transportieren. Hier kommt als Fluidmedium Wasser zum Einsatz.

## Patentansprüche

1. Einrichtung (12) zum Transportieren von Objekten (7), mit einem Transportband (6) zum Transportieren der Objekte und Fluiddüsen (8, 10) zum Behandeln der Objekte (7), **dadurch gekennzeichnet, dass** zusätzlich zum Transportband (6) ein zweites Band (13) vorgesehen ist, das oberhalb des Transportbandes (6) angeordnet ist, um ein Objekt (7) während des Transports auf dem Transportband (6) niederzuhalten, und dass obere Fluiddüsen (8, 10) verstellbar im Abstand zum Transportband (6) ausgeführt sind,
wobei ferner eine seitliche Auflageleiste (17) vorgesehen ist, auf der das zweite Band (13) aufliegen kann.

2. Einrichtung (12) nach Anspruch 1, **dadurch gekennzeichnet, dass** das zweite Band (13) in der gleichen Geschwindigkeit wie das Transportband (6) bewegbar ist.

3. Einrichtung (12) nach einem der vorigen Ansprüche, **dadurch gekennzeichnet, dass** das zweite Band (13) mittels eines Antriebs (15,19) antreibbar ist.

4. Einrichtung (12) nach einem der vorigen Ansprüche, **dadurch gekennzeichnet, dass** ein gemeinsamer Antrieb (15,19) für das Transportband (6) und das zweite Band (13) vorgesehen ist.

5. Einrichtung (12) nach einem der vorigen Ansprüche, **dadurch gekennzeichnet, dass** das zweite Band (13) gitterartig mit Öffnungen vorgesehen ist.

6. Einrichtung (12) nach einem der vorigen Ansprüche, **dadurch gekennzeichnet, dass** das zweite Band (13) als Metallgeflechtsgurt ausgeführt ist.

7. Einrichtung (12) nach einem der vorigen Ansprüche, **dadurch gekennzeichnet, dass** das zweite Band (13) eine offenmaschige Fläche von über 70% aufweist.

8. Einrichtung (12) nach einem der vorigen Ansprüche, **dadurch gekennzeichnet, dass** das Transportband (6) und das zweite Band (13) aus dem gleichen Material ausgeführt sind.

9. Einrichtung (12) nach einem der vorigen Ansprüche, **dadurch gekennzeichnet, dass** zum Niederhalten von Objekten auf dem Transportband (6) die Gewichtskraft des Eigengewichtes des zweiten Bandes (13) vorgesehen ist.

10. Einrichtung (12) nach einem der vorigen Ansprüche, **dadurch gekennzeichnet, dass** die Strecke, über die die Objekte vom zweiten Band (13) niedergehalten werden, länger ist als die Behandlungsstrecke mit den Fluiddüsen (8, 10).

11. Einrichtung (12) nach einem der vorigen Ansprüche, **dadurch gekennzeichnet, dass** die Fluiddüsen (8, 10) Luftdüsen und/oder Wasserdüsen sind.

12. Einrichtung (12) nach einem der vorigen Ansprüche, **dadurch gekennzeichnet, dass** das zweite Band (13) verstellbar im Abstand zum Transportband (6) ausgeführt ist.

13. Einrichtung (12) nach einem der vorigen Ansprüche, **dadurch gekennzeichnet, dass** die Einrichtung wenigstens einen Sensor (18) zur Erfassung einer Packungshöhe (X) aufweist.

14. Einrichtung (12) nach einem der vorigen Ansprüche, **dadurch gekennzeichnet, dass** eine Steuerung vorgesehen ist, mittels der die Verstellung des zweiten Bandes (13) in Abhängigkeit eines Sensors (18) ausführbar ist.

15. Trockentunnel (1) mit einer Einrichtung (12) nach einem der vorigen Ansprüche.

16. Schrumpftunnel mit einer Einrichtung (12) nach einem der Ansprüche 1 bis 14.

17. Verpackungsanlage mit einer Verpackungsmaschine, einem Schrumpftunnel nach Anspruch 16 und/oder einem Trockentunnel (1) nach Anspruch 15.

## Claims

1. Device (12) for transporting objects (7), with a conveyor belt (6) for the transportation of the objects and fluid nozzles (8, 10) for the treatment of the objects (7), **characterised in that** in addition to the conveyor belt (6) a second belt (13) is provided which is arranged above the conveyor belt (6) to retain an object (7) during the transport on the conveyor belt (6), and **in that** upper fluid nozzles (8, 10) are implemented adjustable in their distance to the conveyor belt (6),
wherein further a support strip (17), on which the second belt (13) can be supported, is provided at the side.

2. Device (12) according to Claim 1, **characterised in that** the second belt (13) is movable at the same speed as the conveyor belt (6).

3. Device (12) according to one of the previous claims, **characterised in that** the second belt (13) can be driven by means of a drive (15, 19).

4. Device (12) according to one of the previous claims, **characterised in that** a common drive (15, 19) is provided for the conveyor belt (6) and the second belt (13).

5. Device (12) according to one of the previous claims, **characterised in that** the second belt (13) is provided with openings in the form of a grid.

6. Device (12) according to one of the previous claims, **characterised in that** the second belt (13) is implemented as a metal-mesh belt.

7. Device (12) according to one of the previous claims, **characterised in that** the second belt has an open mesh area of over 70%.

8. Device (12) according to one of the previous claims, **characterised in that** the conveyor belt (6) and the second belt (13) are implemented in the same material.

9. Device (12) according to one of the previous claims, **characterised in that** the gravitational force of the dead weight of the second belt is provided to retain objects on the conveyor belt.

10. Device (12) according to one of the previous claims, **characterised in that** the distance over which the objects are retained by the second belt (13) is longer than the treatment section with the fluid nozzles (8, 10).

11. Device (12) according to one of the previous claims, **characterised in that** the fluid nozzles (8, 10) are air nozzles and / or water nozzles.

12. Device (12) according to one of the previous claims, **characterised in that** the second belt (13) can be adjusted for the distance to the conveyor belt (6).

13. Device (12) according to one of the previous claims, **characterised in that** the device has at least one sensor (18) for the acquisition of a package height (X).

14. Device (12) according to one of the previous claims, **characterised in that** a controller is provided, by means of which the adjustment of the second belt (13) is implemented in dependence of a sensor (18).

15. Tunnel dryer (1) with a device according to one of the previous claims.

16. Shrink tunnel with a device according to one of the Claims 1 to 14.

17. Packaging system with a packaging machine, a shrink tunnel according to Claim 16 and / or a tunnel dryer (1) according to Claim 15.

## Revendications

1. Dispositif (12) pour transporter des objets (7), comprenant une bande transporteuse (6) pour transporter les objets, et des buses de fluide (8, 10) pour traiter les objets (7), **caractérisé en ce qu'**en plus de la bande transporteuse (6), il est prévu une deuxième bande (13), qui est agencée au-dessus de la bande transporteuse (6), en vue de maintenir un objet (7) appliqué sur la bande transporteuse (6) pendant le transport, et **en ce que** des buses de fluide (8, 10) supérieures sont réalisées réglables quant à leur distance d'espacement à la bande transporteuse (6),
et **en ce qu'**il est prévu une surface d'appui (17) latérale, sur laquelle peut reposer la deuxième bande (13).

2. Dispositif (12) selon la revendication 1, **caractérisé en ce que** la deuxième bande (13) peut se déplacer à la même vitesse que la bande transporteuse (6).

3. Dispositif (12) selon l'une des revendications précédentes, **caractérisé en ce que** la deuxième bande (13) peut être entraînée à l'aide d'un système d'entraînement (15, 19).

4. Dispositif (12) selon l'une des revendications précédentes, **caractérisé en ce qu'**il est prévu un système d'entraînement (15, 19) commun pour la bande transporteuse (6) et la deuxième bande (13).

5. Dispositif (12) selon l'une des revendications précédentes, **caractérisé en ce que** la deuxième bande (13) est prévue avec des ouvertures à la manière d'un grillage.

6. Dispositif (12) selon l'une des revendications précédentes, **caractérisé en ce que** la deuxième bande (13) est réalisée sous la forme d'une sangle en tresse métallique.

7. Dispositif (12) selon l'une des revendications précédentes, **caractérisé en ce que** la deuxième bande (13) présente une surface à mailles ouvertes de plus de 70%.

8. Dispositif (12) selon l'une des revendications précédentes, **caractérisé en ce que** la bande transporteuse (6) et la deuxième bande (13) sont réalisées dans le même matériau.

9. Dispositif (12) selon l'une des revendications précédentes, **caractérisé en ce que** pour maintenir des objets appliqués sur la bande transporteuse (6), on prévoit d'utiliser la force de gravité due au poids propre de la deuxième bande (13).

10. Dispositif (12) selon l'une des revendications précédentes, **caractérisé en ce que** l'étendue de parcours sur laquelle les objets sont maintenus appliqués par la deuxième bande (13), est plus longue que l'étendue de parcours de traitement avec les buses de fluide (8, 10).

11. Dispositif (12) selon l'une des revendications précédentes, **caractérisé en ce que** les buses de fluide (8, 10) sont des buses d'air et/ou des buses d'eau.

12. Dispositif (12) selon l'une des revendications précédentes, **caractérisé en ce que** la deuxième bande (13) est réalisée réglable quant à sa distance à la bande transporteuse (6).

13. Dispositif (12) selon l'une des revendications précédentes, **caractérisé en ce que** le dispositif comprend au moins un capteur (18) pour relever une hauteur d'emballage (X).

14. Dispositif (12) selon l'une des revendications précédentes, **caractérisé en ce qu'**il est prévu un système de commande au moyen duquel il est possible d'effectuer le réglage de la deuxième bande (13) en fonction d'un capteur (18).

15. Tunnel de séchage (1) comprenant un dispositif (12) selon l'une des revendications précédentes.

16. Tunnel de rétraction comprenant un dispositif (12) selon l'une des revendications 1 à 14.

17. Installation d'emballage comprenant une machine d'emballage, un tunnel de rétraction selon la revendication 16 et/ou un tunnel de séchage (1) selon la revendication 15.
